# EUROPEAN PATENT APPLICATION

(11) **EP 4 516 095 A1**
(43) Date of publication of application: **05.03.2025**
(21) Application number: 24197120.9
(22) Date of filing: 29.08.2024
(51) Int. Cl.: A01K 27/00, F16G 11/04, F16G 11/14

(54) **MULTIFUNCTIONAL PET TRACTION ROPE**

(30) Priority: 30.08.2023 CN 202322334195 U
(71) Applicant: TrueLove Pet Products Co., Ltd., Quanzhou Fujian (CN)
(72) Inventor: WU, Yongjin, Quanzhou (CN)
(74) Representative: ZHAOffice SPRL

(57) **Abstract**

A multifunctional pet traction rope is provided, comprising a rope body, a hook fixed to one end of the rope body, and an adjustment buckle; at least four threading holes are opened on the adjustment buckle, arranged in at least two rows; the rope body passes through two of these threading holes, forming a first limiting section between the two threading holes; the end of the rope body, passes through two of the remaining threading holes, forming a second limiting section located between the first limiting section and the adjustment buckle; a loop is formed by segments of the rope body between the first section and the second limiting section; the end of the rope body adjacent to the hook slides relative to the adjustment buckle, allowing a position of the first limiting section on the rope body to change and thereby adjust a size of the loop.

## Description

### TECHNICAL FIELD

The present application relates to the technical field of articles for pets, specifically to a multifunctional pet traction rope.

### BACKGROUND

A pet traction rope is a tool used to limit a pet's range of movement while outdoors, installed on a pet's collar or harness, to prevent excessive impact on people or objects in the surrounding environment. Pet traction ropes can be categorized based on their material into nylon traction ropes, woven strap traction ropes, and metal traction ropes. Users can choose the appropriate material based on their pet's size and their own needs to guide the pet's walking. Currently, most pet traction ropes on the market have a fixed loop at the end farthest from the pet, and the size of this loop is generally non-adjustable. The loop size is usually designed only to fit the user's hand, requiring the user to hold the loop to restrain the pet. Consequently, if a user carrying other items uses such a traction rope, and holds the traction rope with one hand while carrying items with the other hand, it can result in an excessive load on that hand. If the hand holding the traction rope also carries items, there is a risk of those items falling when the pet jumps or runs. This type of traction rope has limited applicability, and using a traction rope that requires holding to restrict a pet's movement can inconvenience users who need to carry other items or engage in other activities.

### SUMMARY

Based on this, it is necessary to address the aforementioned shortcomings by providing a multifunctional pet traction rope with an adjustable loop to accommodate various usage scenarios.

A multifunctional pet traction rope comprises a rope body, a hook fixed to one end of the rope body for attachment to a pet's collar or harness, and an adjustment buckle; at least four threading holes are opened on the adjustment buckle, arranged in at least two rows; the rope body passes through two of these threading holes, forming a first limiting section between the two threading holes; the end of the rope body, away from the hook, passes through two of the remaining threading holes, forming a second limiting section located between the first limiting section and the adjustment buckle; a loop is formed by segments of the rope body between the first section and the second limiting section; the end of the rope body adjacent to the hook slides relative to the adjustment buckle, allowing a position of the first limiting section on the rope body to change and thereby adjust a size of the loop.

In the multifunctional pet traction rope of the present application, the adjustment buckle has a rectangular or square plate-like structure, and the adjustment buckle has four threading holes corresponding to four corners of the adjustment buckle, or the adjustment buckle has four threading holes corresponding to four edges of the adjustment buckle.

In the multifunctional pet traction rope of the present application, the adjustment buckle has a pentagonal plate-like structure, and the adjustment buckle has five threading holes corresponding to five corners of the adjustment buckle, or the adjustment buckle has five threading holes corresponding to five edges of the adjustment buckle.

In the multifunctional pet traction rope of the present application, the first limiting section and the second limiting section are arranged to intersect, with an angle between the first section and the second limiting section being either acute or obtuse.

In the multifunctional pet traction rope of the present application, an angle between the first limiting section and the second limiting section is a right angle.

In the multifunctional pet traction rope of the present application, the threading holes are circular, oval, polygonal, or flower-shaped.

In the multifunctional pet traction rope of the present application, the adjustment buckle is made of metal, plastic, or ceramic material; the metal material is stainless steel, copper, or aluminum.

In the multifunctional pet traction rope of the present application, the rope body is made of nylon material, plastic material, or woven strap.

In the multifunctional pet traction rope of the present application, the multifunctional pet traction rope further includes an end buckle, which is fixed at the end of the rope body away from the hook, and a connection part of the end buckle with the rope body abuts against an edge of the threading hole.

In the multifunctional pet traction rope of the present application, a cross-sectional dimension of the end buckle is greater than or equal to a cross-sectional dimension of the threading hole, and the end buckle is detachably connected to the rope body.

The multifunctional pet traction rope of the present application is implemented by setting an adjustment buckle. By adjusting the position of the rope body relative to the adjustment buckle at the end near the hook, the position of the first limiting section on the rope body changes, thereby altering the size of the loop. When the pet pulls on the rope body during use, the first limiting section presses against the second limiting section, ensuring the reliability of the loop size adjustment. Users can adjust the loop size according to their needs, allowing them to hold the loop with their hand, place the loop over their shoulder, or fix the loop to an external stationary object, thus accommodating various usage scenarios and meeting the needs of users in different situations for restraining their pets.

### BRIEF DESCRIPTION OF THE DRAWINGS

Figure 1 is a structural schematic diagram of the multifunctional pet traction rope in one state in an embodiment of the present application.
Figure 2 is a structural schematic diagram of the multifunctional pet traction rope in another state in an embodiment of the present application.
Figure 3 is a structural schematic diagram showing the adjustment buckle in cooperation with the rope body in an embodiment of the present application.
Figure 4 is a structural schematic diagram showing the adjustment buckle in cooperation with the rope body in another embodiment of the present application.
Figure 5 is a structural schematic diagram of the adjustment buckle in an embodiment of the present application.
Figure 6 is a structural schematic diagram of the adjustment buckle in another embodiment of the present application.
Figure 7 is a structural schematic diagram of the adjustment buckle in yet another embodiment of the present application.

### DETAILED DESCRIPTION OF THE PREFERRED EMBODIMENT

To make the above objectives, characteristics, and advantages of the present application more apparent and understandable, the following detailed description of specific embodiments of the present application is provided in conjunction with the accompanying drawings. Many specific details are described below to facilitate a full understanding of the present application. However, the present application can be implemented in many different ways not described herein, and those skilled in the art can make similar improvements without departing from the spirit of the present application. Therefore, the present application is not limited to the specific embodiments disclosed below.

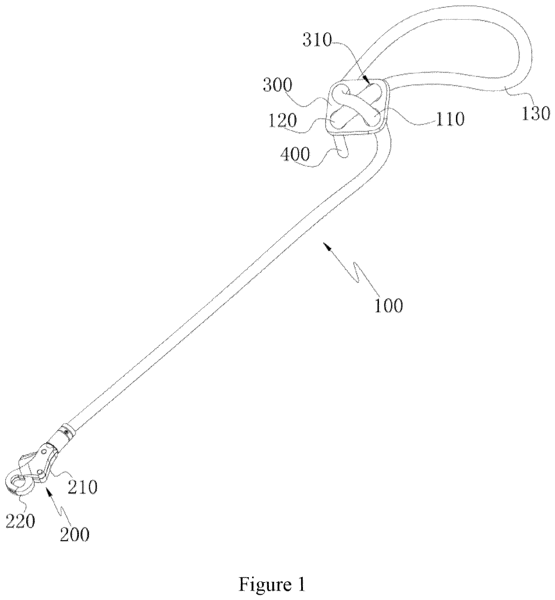

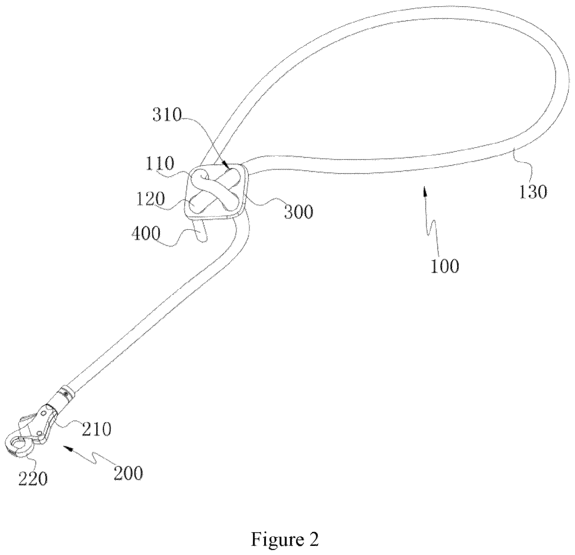

Please refer to Figures 1 and 2. The present application discloses a multifunctional pet traction rope with an adjustable loop suitable for various use scenarios. This multifunctional pet traction rope includes a rope body 100, a hook 200 fixed at one end of the rope body 100 and used for attachment to a pet collar or harness, and an adjustment buckle 300. The rope body 100 is used to extend the distance between the pet and the user, or between the pet and other external fixed objects, allowing the pet to move within a certain range relative to the user or other external fixed objects while constrained by the traction rope. The hook 200 is used to connect the rope body 100 with the pet, reducing the difficulty of connecting the rope body 100 with the pet's collar or harness. Of course, in extreme cases, the hook 200 may be omitted, and the end of the rope body 100 originally intended for the hook 200 can be looped around the pet to meet the user's need to lead the pet. The adjustment buckle 300, on one hand, works with the rope body 100 to form a loop at the end of the rope body 100 that is away from the hook 200, which can be used by the user for grasping or looping around external fixed objects. The adjustment buckle 300 also adjusts the size of the loop when the rope body 100 is pulled, accommodating different methods of leading the pet (hand pulling or looping over the shoulder) and different constraint methods (manual leading and fixed object looping). As the size of the loop is adjusted, the distance between the pet and the user or the distance between the pet and the external fixed object will be adjusted simultaneously, achieving the purpose of adjusting the pet's activity range.

Specifically, referring to Figures 1-3, in this embodiment, the adjustment buckle 300 is provided with at least four threading holes 310, and these threading holes 310 are arranged in at least two rows. In other words, the threading holes 310 on the adjustment buckle 300 are arranged in a non-parallel manner, so as to allow the rope body 100 to pass through the threading holes 310 on the adjustment buckle 300 and form a crossed first limiting section and second limiting section. The rope body 100 passes through two of the threading holes 310 to form a first limiting section 110 between these two threading holes 310. In this embodiment, when multiple threading holes 310 are distributed in a circular pattern on the adjustment buckle 300, at least one threading hole 310 should be spaced between the two threading holes 310 used to form the first limiting section 110, so that the second limiting section formed when the rope body 100 passes through the remaining threading holes 310 can intersect with the first limiting section 110. The end of the rope body 100 far from the hook 200 passes through two of the remaining threading holes 310 and forms a second limiting section 120 between the first limiting section 110 and the adjustment buckle 300. The section of the rope body 100 between the first limiting section 110 and the second limiting section 120 forms a loop 130. It can also be understood that the first limiting section 110 is pressed over the second limiting section 120. Thus, when the multifunctional pet traction rope is assembled and the hook 200 is connected to the pet's collar, the first limiting section 110 will be pressed against the second limiting section 120 by the pet's movement and the user' s pulling force. This prevents the end of the rope body 100 from slipping out of the threading holes 310 of the adjustment buckle 300, prevents movement of the rope body 100 relative to the adjustment buckle 300, and ensures that the size of the loop 130 remains stable after adjustment, improving the reliability of the size adjustment and the structural stability of the multifunctional pet traction rope.

The end of the rope body 100 adjacent to the hook 200 slides relative to the adjustment buckle 300, thereby changing the position of the first limiting section 110 on the rope body 100 and adjusting the size of the loop 130. During the use of the multifunctional pet traction rope, the user can loosen one end of the loop 130 and adjust the position of the end of the rope body 100 adjacent to the hook 200 relative to the adjustment buckle 300, thereby increasing or decreasing the distance between the end of the rope body 100 adjacent to the hook 200 and the adjustment buckle 300, and consequently adjusting the size of the loop 130.

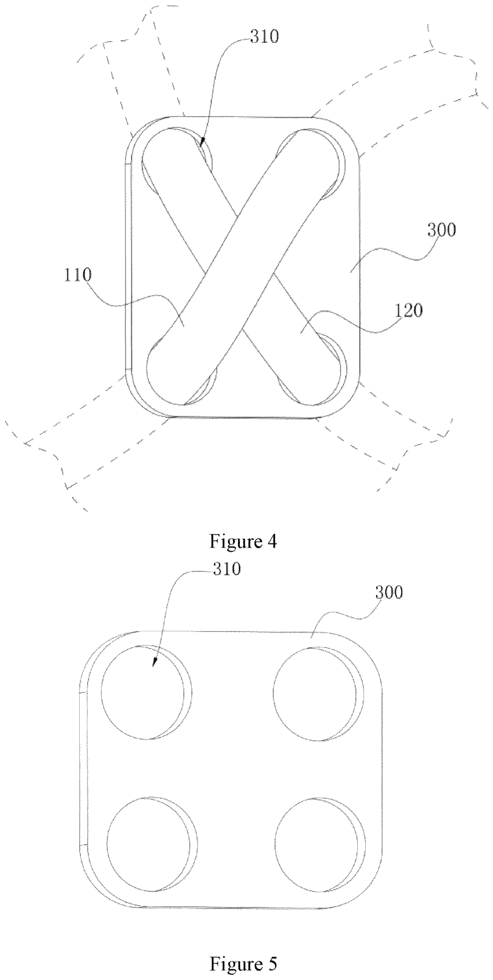

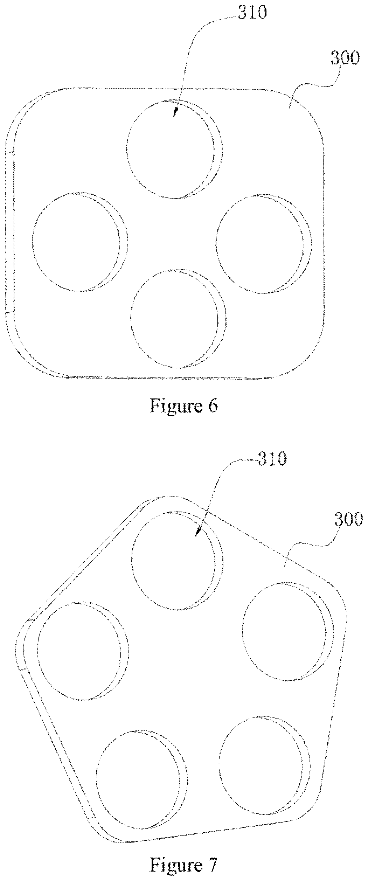

It should be noted that in this embodiment, when only four threading holes 310 are provided on the adjustment buckle 300, these four threading holes 310 can be arranged at the four corners of a square, diamond, or rectangle. Specifically, in one embodiment, the adjustment buckle 300 has a rectangular or square plate-like structure, and four threading holes 310 corresponding to the four corners of the adjustment buckle 300 are provided (as shown in Figure 5). Alternatively, four threading holes 310 corresponding to the four edges of the adjustment buckle 300 are provided (as shown in Figure 6). In another embodiment, three threading holes 310 are arranged in a row, and the fourth threading hole 310 is positioned above the middle threading hole 310. The rope body 100 first passes through the first and third threading holes 310 arranged in a row, and then the end of the rope body 100 is sequentially threaded through the middle threading hole 310 and the threading hole 310 above it. Referring to Figure 7, in another embodiment, the adjustment buckle 300 has a pentagonal plate-like structure, with five threading holes 310 corresponding to the five corners of the adjustment buckle 300, or five threading holes 310 corresponding to the five edges of the adjustment buckle 300.

When the adjustment buckle 300 has five or more threading holes 310, while ensuring that the first limiting section 110 and the second limiting section 120 intersect and that the first limiting section 110 presses against the second limiting section 120, the user can choose only four of the threading holes 310 for threading the rope body 100. Additionally, the rope body 100 can pass through the threading holes 310 of the adjustment buckle 300 in three or more passes, thereby forming a third limiting section and even a fourth limiting section between the second limiting section 120 and the adjustment buckle 300, further enhancing the stability of the connection between the rope body 100 and the adjustment buckle 300.

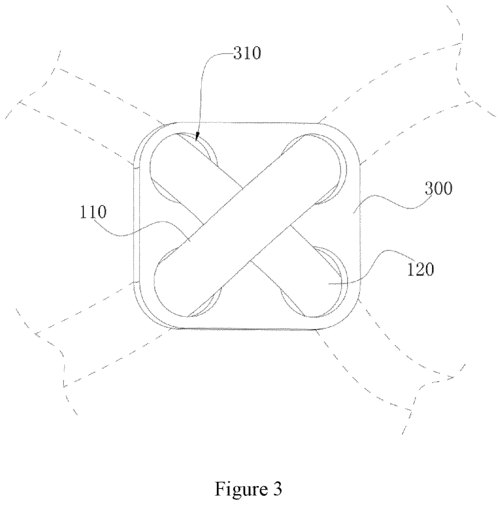

Referring to Figure 4, in one embodiment, the first limiting section 110 and the second limiting section 120 are arranged to intersect, and the angle between the first limiting section 110 and the second limiting section 120 is either acute or obtuse. In another embodiment, the angle between the first limiting section 110 and the second limiting section 120 is a right angle. It should be noted that a right-angle configuration between the first limiting section 110 and the second limiting section 120 includes three scenarios: First, where the middle of the first limiting section 110 overlaps with the middle of the second limiting section 120, in which case the first limiting section 110 exerts a better restraining effect on the second limiting section 120 (as shown in Figure 3); Second, where the middle of the first limiting section 110 overlaps with the edge of the second limiting section 120, which may result in the first limiting section 110 slipping off the edge of the second limiting section 120, causing the first limiting section 110 to fail in restraining the second limiting section 120; Third, where the edge of the first limiting section 110 overlaps with the middle of the second limiting section 120.

In this embodiment, the threading hole 310 can be a circular hole, elliptical hole, polygonal hole, or flower-shaped hole, and may also be other irregular shapes. The adjustment buckle 300 is made from metal, plastic, or ceramic materials; the metal can be stainless steel, metal copper, or metal aluminum, though other metal materials may also be used for the adjustment buckle 300. Preferably, the adjustment buckle 300 is made from aluminum, which reduces the overall weight of the adjustment buckle 300 while extending its service life. The rope body 100 is made from nylon, plastic, or woven fabric, and can also be made from plastic material with a surface-wrapped woven layer to provide some elasticity to the rope body 100. Additionally, the hook 200 in this embodiment can be any hook available on the market that can connect with the rope body 100. The hook 200 includes a hook body 210 and a gripping member 220 connected to the hook body 210, which can be pressed to adjust its opening degree. A clearance area is formed between the gripping member 220 and the hook body 210, through which a pet collar or harness can be inserted. When the gripping member 220 is opened, it allows the clearance area to open for attaching the hook 200 to a pet collar or harness.

It should be noted that in one embodiment, the multifunctional pet traction rope also includes an end buckle 400, which is fixed at one end of the rope body 100, away from the hook 200, and the connecting part of the end buckle 400 abuts the edge of the threading hole 310. In this embodiment, the end buckle 400 is made of metal materials such as stainless steel, metal aluminum, or metal copper. The end buckle 400 has a cylindrical structure or a cylindrical structure with a closed bottom. On one hand, the end buckle 400 is used to constrain the end of the rope body 100 to prevent damage. On the other hand, the end buckle 400 abuts the edge of the threading hole 310 to achieve secondary positioning of the rope body 100 and the adjustment buckle 300 connection state, preventing the end of the rope body 100 from falling off the adjustment buckle 300, thereby avoiding the loop 130 from opening and ensuring the reliability of the multifunctional pet traction rope. Furthermore, the cross-sectional size of the end buckle 400 is greater than or equal to the size of the threading hole 310, and the end buckle 400 is detachably connected to the rope body 100. When the cross-sectional size of the end buckle 400 is greater than the size of the threading hole 310 (e.g., the diameter of the end buckle 400 is larger than the inner diameter of the threading hole 310), the rope body 100 can be threaded through the adjustment buckle 300 first, and then the end buckle 400 can be fixed at the end of the rope body 100. The rope body 100 and end buckle 400 can be connected by threading or clipping methods. When the cross-sectional size of the end buckle 400 is equal to the size of the threading hole 310, the end buckle 400 can also be fixed to the end of the rope body 100 using adhesive, heat-pressing, or ultrasonic welding techniques.

The multifunctional pet traction rope of the present application is implemented by setting an adjustment buckle 300. After adjusting the position of the adjustment buckle 300 relative to the end of the rope body 100 near the hook 200, the position of the first limiting section 110 on the rope body 100 changes, causing the size of the loop 130 to alter. When pulling a pet, the pet's force on the rope body 100 causes the first limiting section 110 to press against the second limiting section 120, ensuring the reliability of the size adjustment of the loop 130. Users can adjust the size of the loop 130 according to their needs, allowing them to grasp the loop 130 by hand, place it over their shoulder, or secure it to an external fixture, accommodating various usage scenarios and meeting the needs of users in different situations for pet traction..

The technical features of the embodiments described above can be combined in any manner. For the sake of brevity, not all possible combinations of the various technical features in the embodiments have been described. However, as long as these technical feature combinations are not contradictory, they should be considered within the scope of this specification.

The embodiments described above illustrate several implementations of this application. The descriptions are specific and detailed, but they should not be understood as limiting the scope of the application patent. It should be noted that various modifications and improvements can be made by those skilled in the art without departing from the inventive concept of this application. All such modifications and improvements fall within the protection scope of this application. Therefore, the scope of protection for this application patent shall be defined by the appended claims.

## Claims

1. A multifunctional pet traction rope , wherein, comprising a rope body, a hook fixed to one end of the rope body for attachment to a pet's collar or harness, and an adjustment buckle; at least four threading holes are opened on the adjustment buckle, arranged in at least two rows; the rope body passes through two of these threading holes, forming a first limiting section between the two threading holes; the end of the rope body, away from the hook, passes through two of the remaining threading holes, forming a second limiting section located between the first limiting section and the adjustment buckle; a loop is formed by segments of the rope body between the first section and the second limiting section; the end of the rope body adjacent to the hook slides relative to the adjustment buckle, allowing a position of the first limiting section on the rope body to change and thereby adjust a size of the loop.

2. The multifunctional pet traction rope according to claim 1, wherein the adjustment buckle has a rectangular or square plate-like structure, and the adjustment buckle has four threading holes corresponding to four corners of the adjustment buckle, or the adjustment buckle has four threading holes corresponding to four edges of the adjustment buckle.

3. The multifunctional pet traction rope according to claim 1, wherein the adjustment buckle has a pentagonal plate-like structure, and the adjustment buckle has five threading holes corresponding to five corners of the adjustment buckle, or the adjustment buckle has five threading holes corresponding to five edges of the adjustment buckle.

4. The multifunctional pet traction rope according to claim 1, wherein the first limiting section and the second limiting section are arranged to intersect, with an angle between the first section and the second limiting section being either acute or obtuse.

5. The multifunctional pet traction rope according to claim 1, wherein an angle between the first limiting section and the second limiting section is a right angle.

6. The multifunctional pet traction rope according to claim 1, wherein the threading holes are circular, oval, polygonal, or flower-shaped.

7. The multifunctional pet traction rope according to claim 1, wherein the adjustment buckle is made of metal, plastic, or ceramic material; the metal material is stainless steel, copper, or aluminum.

8. The multifunctional pet traction rope according to claim 1, wherein the rope body is made of nylon material, plastic material, or woven strap.

9. The multifunctional pet traction rope according to claim 1, wherein it further includes an end buckle, which is fixed at the end of the rope body away from the hook, and a connection part of the end buckle with the rope body abuts against an edge of the threading hole.

10. The multifunctional pet traction rope according to claim 9, wherein a cross-sectional dimension of the end buckle is greater than or equal to a cross-sectional dimension of the threading hole, and the end buckle is detachably connected to the rope body.
